# FASCICULE DE BREVET EUROPEEN

(11) **EP 2 337 655 B1**
(45) Date de publication et mention de la délivrance du brevet: **27.03.2013**
(21) Numéro de dépôt: 09745117.3
(22) Date de dépôt: 09.10.2009
(51) Int. Cl.: B24C 11/00, B24D 3/00, C09G 1/02, C09K 3/14

(54) **GRAINS FONDUS ABRASIFS**
GESCHMOLZENE SCHLEIFKÖRPER
ABRASIVE MOLTEN GRAINS

(30) Priorité: 09.10.2008 FR 0856835
(43) Date de publication de la demande: 29.06.2011
(73) Titulaire: Saint-Gobain Centre de Recherches et d'Etudes Européen, 92400 Courbevoie (FR)
(72) Inventeur: MARLIN, Samuel, F-13750 Plan D'orgon (FR); PETIGNY, Sylvain, F-84740 Velleron (FR)
(74) Mandataire: Sartorius, Jérome
(86) Numéro de dépôt international: PCT/IB2009/054444
(87) Numéro de publication internationale: WO 2010/041223

(56) Documents cités:
- EP-A- 0 011 583
- US-A- 4 126 429
- US-A1- 2004 040 218

## Description

### DOMAINE TECHNIQUE

La présente invention concerne des grains fondus contenant de l'oxyde de magnésium. L'invention concerne également un outil abrasif comportant des grains conformes à l'invention et un procédé de fabrication de grains selon l'invention.

### ETAT DE LA TECHNIQUE

On classe généralement les outils abrasifs selon le mode de mise en forme des grains céramiques qui les constituent : abrasifs libres, utilisés en projection ou en suspension, sans support ; abrasifs appliqués où les grains sont fixés sur un support de type toile, papier ou film polymère et abrasifs agglomérés sous forme de meules circulaires, de bâtons, etc.

Dans le cas des abrasifs agglomérés, les grains abrasifs sont pressés avec un liant organique, par exemple une résine phénolique, ou vitreux, par exemple avec un liant constitué d'oxydes, notamment un liant silicaté. Ces grains doivent présenter eux-mêmes de bonnes propriétés mécaniques à l'abrasion, notamment une bonne ténacité et/ou dureté, et donner lieu à une bonne cohésion avec le liant (solidité de l'interface).

On trouve aujourd'hui différentes familles de grains abrasifs permettant de couvrir une large gamme d'applications et de performances. Dans la famille des grains d'alumine, on distingue en particulier, en fonction de l'application, les grains d'alumine électrofondue (corindons), les grains d'alumine-zircone électrofondues et les grains d'alumine fabriqués par procédé Sol-Gel.

Les grains synthétisés par fusion des matières premières, dits "grains fondus", offrent un excellent compromis qualité / coût de fabrication.

Dans la gamme des grains fondus, les matériaux à base d'alumine et de zircone sont connus depuis US-A-3,181,939. Ces grains sont généralement composés de 10 à 60% de zircone, de 0 à 10% d'un additif, le complément étant l'alumine. En pratique, le taux de zircone des produits du commerce se situe soit autour de 25%, soit autour de la valeur de l'eutectique alumine-zircone située à environ 42% de zircone, généralement entre 35 et 50%, comme décrit dans le brevet US-A-3,891,408.

On connaît de EP 1 613 709 des grains contenant de 2,2% à 6,5% d'oxyde de magnésium, le complément étant Al₂O₃. Ces grains alumineux sont fabriqués par fusion de matières premières. Le liquide en fusion est ensuite refroidi, de préférence rapidement pour favoriser l'obtention de structures fines et orientées, par exemple au moyen d'un dispositif de coulée entre plaques minces métalliques tel que celui présenté dans le brevet US-A-3,993,119. Le matériau refroidi est enfin broyé, par exemple au moyen de broyeurs à rouleaux, puis tamisé et classifié en séries de distributions granulométriques, ou « grits », répondant à des normes précises, par exemple FEPA.

US 4,126,429 décrit des grains fondus abrasifs à base d'alumine et de zircone comportant entre 1 et 2% de MgO. La teneur en zircone est comprise entre 22% et 28% et US 4,126,429 explique que les performances des grains chutent dès que la teneur en zircone est inférieure à 22%. Le pourcentage optimal de zircone étant considéré comme situé au voisinage de 25%. Le document US 2004-0040218 est considéré comme représentant l'état de la technique le plus proche, décrit des grains fondus avec 24,6 % ZrO₂ et un rapport massique ZrO₂/MgO de 23,4 dans l'exemple 16.

Un grain fondu abrasif doit présenter un compromis entre dureté et résistance à l'impact et à la fracturation qui soit adapté à l'application dans laquelle il est utilisé. Ce compromis dépend en effet des matières abrasées et des conditions d'abrasion.

La dureté correspond à la capacité du grain à pénétrer dans la matière abrasée tandis que la résistance à l'impact et à la fracturation détermine la régénération, par micro fracturation, des surfaces abrasives du grain.

Il existe donc un besoin permanent pour des grains abrasifs plus compétitifs et offrant de nouveaux compromis entre la dureté d'une part et la résistance à l'impact et à la fracturation d'autre part. Un but de l'invention est de répondre à ce besoin.

### RESUME DE L'INVENTION

La présente invention concerne des grains fondus présentant l'analyse chimique suivante, en pourcentages en masse sur la base des oxydes :
Al₂O₃ : complément à 100%
ZrO₂+HfO₂ : 16-24%,
MgO en une quantité telle que le rapport massique (ZrO₂+HfO₂)/MgO soit compris entre 25 et 65,
Autres espèces : 0-2%.

Comme on le verra plus en détail dans la suite de la description, les grains selon l'invention présentent simultanément une bonne résistance à l'impact et à la fracturation et une bonne dureté.

Le document US2004-0040218 est considéré

Les grains fondus selon l'invention peuvent encore présenter une ou plusieurs de caractéristiques suivantes :
- La teneur en rO₂+HfO₂ est de préférence supérieure à 17,0% en masse, de préférence supérieure à 18,0% et/ou inférieure à 23,0%, de préférence inférieure à 22,5%. Dans un mode de réalisation où le coût de fabrication est un paramètre important, la teneur en ZrO₂+HfO₂ est de préférence inférieure à 22,0%, de préférence inférieure à 20,0%.
- Le rapport massique (ZrO₂+HfO₂)/MgO est de préférence supérieur à 28, de préférence supérieur à 30, de préférence encore supérieur à 35, ou même supérieur à 40 et/ou inférieur à 60, inférieur à 55, inférieur à 50, voire inférieur à 47.
- La teneur en oxyde de magnésium est de préférence supérieure à 0,35%, de préférence supérieure à 0,40%, et/ou inférieure à 0,95 %, inférieure à 0,90 %, inférieure à 0,85 %, inférieure à 0,80%, de préférence inférieure à 0,70%, de préférence encore inférieure à 0,60%.
- La teneur totale en « autres espèces » est de préférence inférieure à 1%, voire inférieure à 0,5%, voire inférieure à 0,4%. De préférence, les autres espèces ne sont que des impuretés. De préférence, la teneur de chacune des impuretés est inférieure à 0,1%. En particulier, de préférence, Na₂O < 0,1%, voire Na₂O < 0,05%. De préférence également, les teneurs en SiO₂, CaO, TiO₂, Fe₂O₃ ou en Cr₂O₃ sont chacune inférieures à 0,5%, de préférence inférieures à 0,3%. De préférence toujours, le carbone résiduel est inférieur à 1500 ppm, inférieur à 1300 ppm, voire inférieur à 800 ppm.
- De préférence, la taille des grains est supérieure à 150 µm, et/ou inférieure à 3,35 mm, ou inférieure à 2 mm.

Les grains fondus selon l'invention peuvent être sous la forme d'un mélange de grains, notamment sous la forme d'un mélange de grains prêt à être utilisé comme matière première pour la fabrication d'un outil abrasif, ou sous une forme où ces grains sont immobilisés les uns par rapport aux autres, par exemple parce qu'ils sont fixés sur une toile ou liés entre eux afin de constituer une masse rigide, notamment pour constituer un abrasif aggloméré.

Un tel mélange de grains peut également servir de médium abrasif, notamment dans une application de sablage, ou dans une application où ce mélange est projeté sur une pièce à nettoyer ou à décaper.

L'invention concerne ainsi également un mélange de grains comportant, voire constitué par, des grains selon l'invention.

L'invention concerne encore un outil abrasif comportant des grains liés par un liant et agglomérés, par exemple sous forme de meule, ou déposés sur un support, par exemple déposés en couche un support souple, cet outil étant remarquable en ce qu'au moins une partie, voire la totalité, desdits grains sont conformes à l'invention.

L'outil abrasif peut être en particulier une meule de rectification, une meule de précision, une meule d'affûtage, une meule de tronçonnage, une meule de taillage dans la masse, une meule d'ébarbage ou de dégrossissage, une meule d'entraînement, une meule portable, une meule pour fonderies, une meule à forets, une meule sur tiges, une meule cylindrique, à cônes, à disques ou à segments ou tout autre type de meule.

### DEFINITIONS

Par « grain fondu », on entend un grain obtenu suivant un procédé comportant une solidification, par refroidissement, d'un liquide en fusion.

Un « liquide en fusion » est une masse liquide qui, pour conserver sa forme, doit être contenue dans un récipient. Elle peut contenir quelques particules solides, mais en quantité insuffisante pour qu'elles puissent structurer ladite masse.

Par "mélange de grains", on entend un mélange de grains coulable, c'est-à-dire ne présentant pas de rigidité intrinsèque. Pour des grains de petite taille, on parle classiquement de "poudre".

Classiquement, la "taille" d'un grain correspond à la maille de tamis standard minimale à travers laquelle ledit grain peut passer.

Lorsqu'il est fait référence à des grits ou à la norme FEPA-F, il est fait référence à la norme FEPA-F Standard 42-GB-1984.

Les teneurs en oxydes des grains se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments sus-mentionnés.

Lorsqu'une composition chimique d'un grain fondu est décrite, « Autres espèces » désigne tous les composés qui ne sont pas mentionnés explicitement par ailleurs, et notamment les impuretés.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de sodium et autres alcalins, fer, vanadium et chrome sont des impuretés. L'oxyde d'hafnium, naturellement présent dans les sources de zircone à des teneurs inférieures à 2%, n'est pas considéré comme une impureté lorsque le produit souhaité doit comprendre de la zircone ou de la zircone et de l'oxyde d'hafnium.

Par « ZrO₂ + HfO₂ », on entend un mélange de zircone et d'oxyde d'hafnium dans lequel la quantité d'oxyde d'hafnium correspond à l'oxyde d'hafnium naturellement présent dans la source de zircone.

Les « traces » correspondent à des quantités inférieures à 5% en masse des phases en présence.

Dans les présentes description et revendications, sauf mention contraire, toutes les compositions d'un grain sont données en pourcentages massiques, sur la base des oxydes du grain.

D'autres caractéristiques et avantages de la présente invention apparaîtront à la lecture de la description détaillée qui va suivre.

### DESCRIPTION DETAILLEE

Les grains fondus selon l'invention peuvent être fabriqués selon tout procédé conventionnel de fabrication de grains fondus d'alumine ou d'alumine-zircone, en particulier au moyen d'un four à arc court, avec une énergie de fusion avant coulée d'au moins 1500 kWh par tonne de matières premières pour une puissance de four d'au moins 150 kW. Les conditions de fusion peuvent être telles que les grains présentent une teneur maximale en carbone de 1500 ppm.

Les grains de base peuvent en particulier être fabriqués suivant un procédé comprenant les étapes successives suivantes :
a) mélange de matières premières ;
b) fusion, classiquement dans un four électrique, desdites matières premières mélangées jusqu'à obtention d'un liquide en fusion ;
c) refroidissement par trempe dudit liquide en fusion, de préférence de manière que le liquide en fusion soit entièrement solidifié en moins de 3 minutes, jusqu'à obtention d'une masse solide ;
d) broyage de ladite masse solide de manière à obtenir des grains fondus, et, optionnellement, classification granulométrique desdits grains.

A l'étape a), les matières premières sont choisies, de manière connue, en fonction de la composition désirée pour les grains fondus à fabriquer.

De préférence, la source de zircone est déterminée pour que la quantité d'oxyde d'hafnium soit inférieure à 5%, de préférence inférieure à 2%.

Les sources de matières premières sont de préférence déterminées pour que la teneur totale en impuretés des grains soit inférieure à 0,5% et/ou que la teneur de chacune des impuretés soit inférieure à 0,3%.

La silice et l'oxyde de sodium en particulier sont connus pour être préjudiciables dans les grains fondus, et leurs teneurs respectives devraient être limitées à l'état de traces dans les grains fondus, introduites à titre d'impuretés dans les matières premières. La présence de silice conduit en effet à la formation d'une phase vitreuse qui modifie les propriétés abrasives et la dureté les grains. La présence d'oxyde de sodium, même à des teneurs faibles, conduit à la formation de béta alumine. Or cette forme cristallographique de l'alumine réduit les propriétés abrasives des grains. De préférence, Na₂O < 0,1%, voire Na₂O < 0,05%.

Les matières premières sont donc, de préférence, choisies pour que les teneurs en SiO₂, CaO, TiO₂, Fe₂O₃ ou en Cr₂O₃ dans les grains soient chacune inférieures à 0,5%, de préférence inférieures à 0,3%.

A l'étape b), les conditions de fusion sont de préférence telles que les grains présentent une teneur maximale en carbone de 1500 ppm, 1300 ppm, voire 800 ppm.

En particulier la fusion peut être effectuée au moyen d'un arc court, avec une énergie de fusion avant coulée d'au moins 2000 kWh par tonne de matières premières pour une puissance de four d'au moins 150 kW.

A l'étape c), le refroidissement est rapide et peut résulter, par exemple, par coulage entre des plaques minces refroidies, comme décrit dans US 3,993,119.

L'analyse cristallographique des grains selon l'invention ainsi fabriqués n'a pas permis de relever la présence d'une phase spinelle, sinon à l'état de traces. Les grains présentent une porosité mesurée par Pycnomètre Hélium inférieure à 3%.

A l'étape d), la granulométrie des grains peut être sélectionnée en fonction de l'application visée. De préférence, les grains selon l'invention ont un grit supérieur au Grit 6 et/ou inférieur au Grit 220, inférieur au Grit 80, ou inférieur au Grit 24.

Les procédés de fabrication des outils abrasifs selon l'invention sont bien connus.

Les outils abrasifs agglomérés peuvent être formés par pressage en forme d'un mélange de grains abrasifs et d'un liant.

Dans un outil abrasif selon l'invention, le liant peut être vitrifié (par exemple, un liant constitué d'oxydes, essentiellement silicaté) ou organique. Un liant organique est bien adapté.

Le liant peut être notamment une résine thermodurcissable. Il peut être choisi dans le groupe constitué par les résines phénoliques, époxy, acrylate, polyester, polyimide, polybenzimidazole, polyuréthane, phénoxy, phénol-furfural, analine-formaldéhyde, urée-formaldéhyde, cresol-aldéhyde, resorcinol-aldéhyde, urée-aldéhyde, mélamine-formaldéhyde, et des mélanges de ceux-ci.

Habituellement, le liant représente entre 2 et 60%, de préférence entre 20% et 40% en volume du mélange.

Le liant peut également incorporer des charges organiques ou inorganiques, comme des charges inorganique hydratées (par exemple du trihydrate d'aluminium ou de la bohmite) ou non (par exemple de l'oxyde de molybdène), de la cryolite, un halogène, du fluorspar, du sulfure de fer, du sulfure de zinc, de la magnésie, du carbure de silicium, du chlorure de silicium, du chlorure de potassium, du dichlorure de manganèse, du fluoroborate de potassium ou de zinc, du fluoroaluminate de potassium, de l'oxyde de calcium, du sulfate de potassium, un copolymère de chlorure de vinylidène et de chlorure de vinyle, du chlorure de polyvinylidène, du chlorure polyvinyle, des fibres, sulfures, chlorures, sulfates, fluorures, et des mélanges de ceux-ci. Le liant peut également contenir des fibres de renfort comme des fibres de verre.

### EXEMPLES

Les exemples non limitatifs suivants sont donnés dans le but d'illustrer l'invention.

Les produits de référence (« Réf ») sont des grains alumine-zircone fondus, commercialisés sous l'appellation **ZF®** ou ZS®, et présentant l'analyse chimique suivante, en pourcentages en masse : Al₂O₃ : 75,0%, ZrO₂ + HfO₂ : 24,1 %, TiO₂ : 0,1%, SiO₂ < 0,2%, MgO : 0,05%, CaO : 0,07%, Autres < 0,8%. Les analyses cristallographique et microstructurale révèlent que la totalité de la zircone est combinée avec de l'alumine sous forme d'eutectique ; le complément pour l'alumine se trouve sous forme d'alumine alpha (corindon).

Les autres produits testés ont été élaborés à partir des matières premières suivantes :
- Alumine Bayer® sous-calcinée à teneur en soude inférieure à 0,3%
- Poudre de zircone à teneur en ZrO₂+HfO₂ supérieure à 98%
- Coke de pétrole.

De l'oxyde de magnésium est apporté par des matières pures à plus de 99% de magnésium MgO.

Les produits ont été préparés suivant le procédé classique bien connu de l'homme de l'art :

Des matières premières ont d'abord été dosées de manière à pouvoir fabriquer des grains de composition déterminée.

A ces matières premières ont été ajoutés au minimum 1 % (jusqu'à 3%) de coke de pétrole selon l'état du four, en pourcentages massiques sur la base de la charge de départ.

La charge de départ a ensuite été fondue dans un four à arc électrique monophasé de type Héroult à électrodes en graphite, avec une cuve de four de 0,8 m de diamètre, une tension de 105 V à 150V, une intensité de 1800 à 2500 A et une énergie électrique spécifique fournie de 2,0 à 2,8 kWh/kg chargé.

Le liquide en fusion a ensuite été brusquement refroidi au moyen d'un dispositif de coulée entre plaques minces métalliques tel que celui présenté dans le brevet US-A-3,993,119. Les grains fondus ont ensuite été broyés et classés selon leur granulométrie.

Les grains obtenus sont caractérisés chimiquement par fluorescence des rayons X. L'ensemble des données d'analyse chimique est rassemblé dans le Tableau 1. Le taux d'impuretés hors carbone varie entre 0,3 et 1%. Le complément correspond à la teneur en alumine.

Afin de mettre en évidence les propriétés mécaniques des grains, les tests décrits ci-après ont été mis en oeuvre.

### Test A : Détermination de la résistance à l'impact et à la fracturation

Le test A vise à déterminer la fraction de grains survivants d'une tranche granulométrique donnée après une sollicitation dans un bol de broyage en acier. Ce test permet une évaluation en dynamique de la résistance à la fracturation et de la friabilité des grains.

Préalablement au test, le mélange de grains est d'abord tamisé sur une tamiseuse vibratoire de type ROTAP®, standard dans l'industrie, de manière à isoler la fraction 710 / 850 µm pour représenter le grain de numéro F24 (Grit 24).

La fraction granulométrique isolée subit ensuite un déferrage par séparation magnétique de manière à extraire le fer métallique symptomatique d'une pollution due au broyage.

Pour le test, on utilise un broyeur tournant Sodemi couramment utilisé pour le broyage de poudres en vue de leur analyse chimique. Ce broyeur est monté en suspension sur 8 ressorts et met en mouvement un bol cylindrique creux contenant des grains à tester, un palet et un anneau libre glissant. Le bol cylindrique de broyage en acier (nuance Z160 C 12) a les dimensions suivantes : hauteur de 50 mm, diamètre intérieur de 139 mm. Le palet est un cylindre plein (diamètre 75 mm, hauteur 45 mm) en acier de la nuance Z200C12 et pèse 1546 grammes. L'anneau cylindrique (diamètre intérieur/extérieur 95/120mm, hauteur 45mm) est en acier de la même nuance Z200C12 et pèse 1464 grammes.

Le test A d'un échantillon comporte alors les étapes suivantes.
1- Nettoyage du bol à l'air comprimé.
2- Un échantillon de 25 grammes de fraction granulométrique du produit à tester est introduit entre la paroi du bol de broyage et le palet. Le broyeur Sodemi est mis en route à sa vitesse nominale (1400 tours/min) pour une durée de 4 secondes. Le produit broyé est ensuite extrait du bol de broyage à l'aide d'un pinceau (n° 50) pour analyse de la répartition granulométrique. Le produit est ensuite tamisé dans une série de tamis de 70 mm de diamètre d'une tamiseuse ROTAP® pendant 3 minutes, avec les tamis Tᵢ suivants :

| | | Tamis utilisés (ouvertures en µm) | |
|---|---|---|---|
| Grit représenté | Fraction Testée | T1 | T2 |
| 24 | 710/850 µm | 710 | 425 |

On appelle « T1+T2 » la somme des refus (fractions qui ne traversent pas les tamis), en masse, des tamis T1 et T2. La valeur de la résistance à l'impact et à la fracturation (test A), donnée en pourcent, correspond à la valeur T1+T2 de l'échantillon testé divisée par la valeur T1+T2 de l'échantillon de référence. La résistance à l'impact et à la fracturation sera donc d'autant meilleure que la valeur obtenue au test A est élevée.

### Test B : Détermination de la dureté

Le test B vise à déterminer la dureté Vickers par micro indentation.

Les grains fondus présentant une taille comprise entre 710 et 850 µm sont sélectionnés puis enrobés dans de la résine époxy thermodurcissable. Un sciage et d'un polissage ultérieurs permettent d'obtenir des grains polis sur lesquelles on peut mesurer la dureté Vickers.

La dureté Vickers est déterminée par indentation avec un microduromètre Zwick 3212 équipé d'un diamant Vickers. L'essai de mesure de dureté consiste à imprimer dans le grain abrasif un pénétrateur en forme de pyramide droite à base carrée d'angle au sommet de 136° sous une charge *F* de 50 grammes pendant 15 secondes et à mesurer la diagonale moyenne *d* de l'empreinte laissée (moyenne des deux diagonales de l'empreinte) dans le grain après enlèvement de la charge. La dureté Vickers est proportionnelle au rapport *F*/*S* avec *S* la surface de l'empreinte considérée comme pyramide droite. La dureté Vickers correspond à la moyenne de 10 mesures prises sur 10 empreintes indentées au hasard sur **les** grains polis.

La dureté Vickers (test B), donnée en pourcent, correspond à la valeur 0,189 x *F* / *d²* où *d* = (*d1*+*d2*)/2 et *d1* et *d2* sont les deux diagonales de l'empreinte formée pour l'échantillon testé, divisée par la valeur 0,189 x *F* / *d²* de l'échantillon de référence. La dureté est donc d'autant meilleure que la valeur obtenue au test B est élevée.

Les grains selon l'invention présentent de préférence des résultats supérieurs à 95% au test A et supérieurs à 85% au test B.

**Tableau 1**

| | MgO | ZrO₂+HfO₂ | (ZrO₂+HfO₂) / MgO | MgO/ Al₂O₃ x 10000 | t-ZrO₂/ ZrO₂ | Test A | Test B |
|---|---|---|---|---|---|---|---|
| 1 | 0,56% | 15,9% | 28 | 67 | 48% | 65% | 122% |
| 2 | 1,33% | 16,8% | 13 | 162 | 70% | 62% | 71% |
| 3 | 0,61% | 16,9% | 28 | 75 | 36% | 97% | 100% |
| 4 | 0,68% | 17,0% | 25 | 84 | 44% | 96% | 105% |
| 5 | 0,53% | 17,9% | 34 | 66 | 48% | 109% | 113% |
| 6 | 0,85% | 18,4% | 22 | 106 | 53% | 70% | 108% |
| 7 | 0,49% | 19,1% | 39 | 61 | 66% | 104% | 88% |
| 8 | 0,51% | 19,1% | 37 | 65 | 37% | 106% | 116% |
| 9 | 0,44% | 19,3% | 44 | 56 | 34% | 103% | 109% |
| 10 | 0,40% | 19,9% | 49 | 51 | 37% | 103% | 87% |
| 11 | 0,45% | 20,4% | 45 | 58 | 31% | 107% | 136% |
| 12 | 0,52% | 20,7% | 40 | 67 | 46% | 102% | 132% |
| 13 | 0,48% | 21,1% | 44 | 62 | 30% | 109% | 98% |
| 14 | 0,57% | 21,3% | 37 | 74 | 61% | 98% | 142% |
| 15 | 0,31% | 21,6% | 70 | 40 | 44% | 83% | 66% |
| 16 | 0,42% | 22,3% | 53 | 55 | 30% | 110% | 116% |
| 17 | 2,11% | 23,5% | 11 | 286 | 90% | 72% | 62% |
| Réf | 0,05% | 25,0% | 500 | 0,7 | 30% | 100% | 100% |

Les exemples 2, 6, 15 et 17 montrent qu'un rapport massique (ZrO₂+HfO₂)/MgO compris entre 25 et 65 est nécessaire pour obtenir de bons résultats au test A. L'exemple 1 montre cependant que cette condition est insuffisante pour obtenir de bons résultats au test A lorsque la quantité de zircone est trop faible.

Les exemples 5, 11, 13 et 16 sont préférés entre tous lorsque des performances maximales au test A sont recherchées.

Les exemples 5, 8, 11, 12, et 14 sont préférés entre tous lorsque des performances maximales au test B sont recherchées. Les performances des exemples 11, 12 et 14 sont particulièrement remarquables.

L'exemple 11 présente le meilleur compromis, pour les applications visées, entre résistance à l'impact et dureté. L'exemple 12 fournit également un excellent compromis.

L'exemple 5 est également très avantageux puisqu'il présente d'excellentes performantes avec une faible teneur en zircone, et donc avec un coût de fabrication réduit. Pour la même raison, l'exemple 3, qui présente des performances sensiblement identiques à celles de l'exemple de référence, en constitue une alternative avantageuse.

Une analyse par diffraction des rayons X et par microsonde révèle que, pour les grains de l'invention, la majorité du magnésium se retrouve dans la phase eutectique alumine-zircone ; le complément d'alumine se trouve sous forme d'alumine alpha (corindon) ; on ne retrouve pas de phase spinelle (solution solide d'alumine et d'oxyde de magnésium) ou alors uniquement sous forme de traces, contrairement aux exemples 2 et 17 où on trouve une phase spinelle. On retrouve, pour les grains de l'invention, une proportion de zircone stabilisée sous forme tétragonale (t-ZrO₂) de l'ordre de 30% à 70% par rapport à la zircone.

Comme cela apparaît clairement à présent, les grains de l'invention permettent d'obtenir des propriétés équivalentes ou améliorées par rapport à celles des grains selon la technique antérieure, avec une teneur en zircone plus faible, et donc un coût de fabrication moins élevé.

Bien entendu, la présente invention n'est pas limitée aux modes de réalisation fournis à titre d'exemples illustratifs.

L'étendue de l'invention est définie dans les revendications ci-jointes.

## Revendications

1. Grains fondus présentant l'analyse chimique suivante, en pourcentages en masse sur la base des oxydes :
Al₂O₃ : complément à 100%
ZrO_{z}+Hf0₂ : 16-24%,
MgO en une quantité telle que le rapport massique (ZrO₂+HfO₂)/MgO soit compris entre 25 et 65,
Autres espèces : 0-2%.

2. Grains fondus selon la revendication précédente, dans lesquels le rapport massique (ZrO₂+HfO₂)/MgO est inférieur à 55.

3. Grains fondus selon la revendication précédente, dans lesquels le rapport massique (ZrO₂+HfO₂)/MgO est inférieur à 50.

4. Grains fondus selon l'une quelconque des revendications précédentes, dans lesquels le rapport massique (ZrO₂+HfO₂)/MgO est supérieur à 28.

5. Grains fondus selon la revendication précédente, dans lesquels le rapport massique (ZrO₂+HfO₂)/MgO est supérieur à 30.

6. Grains fondus selon l'une quelconque des revendications précédentes, dans lesquels (ZrO₂+HfO₂) < 22,5%, en pourcentage en masse sur la base des oxydes.

7. Grains fondus selon la revendication précédente, dans lesquels (ZrO₂+HfO₂) < 20,0%, en pourcentage en masse sur la base des oxydes.

8. Grains fondus selon l'une quelconque des revendications précédentes, dans lesquels 17,0% < (ZrO₂+HfO₂), en pourcentage en masse sur la base des oxydes.

9. Grains fondus selon l'une quelconque des revendications précédentes, dans lesquels la zircone stabilisée sous forme tétragonale représente entre 30% et 70% de la zircone.

10. Grains fondus selon l'une quelconque des revendications précédentes présentant une taille supérieure à 150 µm et inférieure à 3,35 mm.

11. Outil abrasif comportant des grains liés par un liant, agglomérés ou déposés sur un support, au moins une partie desdits grains étant conformes à l'une quelconque des revendications précédentes.

12. Utilisation de grains conformes à l'une quelconque des revendications 1 à 10 comme médium abrasif.

## Claims

1. Fused grains having the following chemical analysis, as percentages by weight on the basis of the oxides:
Al₂O₃: balance to 100%
ZrO₂+HfO₂: 16-24%;
MgO in an amount such that the (ZrO₂+HfO₂)/MgO weight ratio is between 25 and 65;
other species: 0-2%.

2. The fused grains as claimed in the preceding claim, in which the (ZrO₂+HfO₂)/MgO weight ratio is less than 55.

3. The fused grains as claimed in the preceding claim, in which the (ZrO₂+HfO₂)/MgO weight ratio is less than 50.

4. The fused grains as claimed in any one of the preceding claims, in which the (ZrO₂+HfO₂)/MgO weight ratio is greater than 28.

5. The fused grains as claimed in the preceding claim, in which the (ZrO₂+HfO₂)/MgO weight ratio is greater than 30.

6. The fused grains as claimed in any one of the preceding claims, in which (ZrO₂+HfO₂) < 22.5%, as a percentage by weight on the basis of the oxides.

7. The fused grains as claimed in the preceding claim, in which (ZrO₂+HfO₂) < 20.0%, as a percentage by weight on the basis of the oxides.

8. The fused grains as claimed in any one of the preceding claims, in which 17.0% < (ZrO₂+HfO₂), as a percentage by weight on the basis of the oxides.

9. The fused grains as claimed in any one of the preceding claims, in which the zirconia stabilized in tetragonal form represents between 30% and 70% of the zirconia.

10. The fused grains as claimed in any one of the preceding claims, having a size of greater than 150 µm and less than 3.35 mm.

11. An abrasive tool comprising grains bound by a binder, bonded to or deposited on a support, at least one portion of said grains being in accordance with any one of the preceding claims.

12. The use of grains in accordance with any one of claims 1 to 10 as an abrasive medium.

## Patentansprüche

1. Geschmolzene Körner, welche folgende chemische Analyse in Massenprozenten auf der Basis von Oxiden aufweisen:
Al₂O₃ ergänzt zu 100%
ZrO₂+HfO₂: 16-24%,
MgO in einer Menge, so dass das Massenverhältnis (ZrO₂+HfO₂)/MgO zwischen 25 und 65 liegen soll,
andere Zutaten: 0-2%.

2. Geschmolzene Körner nach dem vorhergehenden Anspruch, bei denen das Massenverhältnis (ZrO₂+HfO₂)/MgO kleiner als 55 ist.

3. Geschmolzene Körner nach dem vorhergehenden Anspruch, bei denen das Massenverhältnis (ZrO₂+HfO₂)/MgO kleiner als 50 ist.

4. Erschmolzene Körner nach einem der vorhergehenden Ansprüche, bei denen das Massenverhältnis (ZrO₂+HfO₂)/MgO größer als 28 ist.

5. Geschmolzene Körner nach dem vorhergehenden Anspruch, bei denen das Massenverhältnis (ZrO₂+HfO₂)/MgO größer als 30 ist.

6. Geschmolzene Körner nach einem der vorhergehenden Ansprüche, bei denen (ZrO₂+HfO₂) < 22,5% in Massenprozent auf der Basis von Oxiden ist.

7. Geschmolzene Körner nach dem vorhergehenden Anspruch, bei denen (ZrO₂+HfO₂) < 20,0% in Massenprozent auf der Basis von Oxiden ist.

8. Geschmolzene Körner nach einem der vorhergehenden Ansprüche, bei denen 17,0% < (ZrO₂+HfO₂) in Massenprozent auf der Basis von Oxiden ist.

9. Geschmolzene Körner nach einem der vorhergehenden Ansprüche, bei denen das in tetragonaler Form stabilisierte Zirkonoxid zwischen 30% und 70% des Zirkonoxids beträgt.

10. Geschmolzene Körner nach einem der vorhergehenden Ansprüche, welche eine Größe größer als 150 µm und kleiner als 3,35 mm aufweisen.

11. Schleifwerkzeug mit mittels eines Klebers geklebten auf einem Träger agglomerierten und deponierten Körnern, wobei mindestens ein Teil der Körner mit einem der vorhergehenden Ansprüche konform ist.

12. Verwendung von Körnern, die mit einem der Ansprüche 1 bis 10 konform sind, als Schleifmittel.
